# EUROPÄISCHE PATENTSCHRIFT

(11) **EP 2 677 622 B1**
(45) Veröffentlichungstag und Bekanntmachung des Hinweises auf die Patenterteilung: **20.11.2019**
(21) Anmeldenummer: 13170622.8
(22) Anmeldetag: 05.06.2013
(51) Int. Cl.: H02J 3/38, G05F 1/67, G05F 1/70, H02J 3/18, H02J 3/00

(54) **Verfahren und eine Vorrichtung zum Einspeisen von elektrischer Leistung in ein elektrisches Energieversorgungsnetz**
Method and a device for feeding electrical power to an electrical energy supply network
Procédé et dispositif d'injection d'une puissance électrique dans un réseau d'alimentation en énergie électrique

(30) Priorität: 18.06.2012 DE 102012210207
(43) Veröffentlichungstag der Anmeldung: 25.12.2013
(73) Patentinhaber: GE Energy Power Conversion GmbH, 12277 Berlin (DE)
(72) Erfinder: Jalili, Kamran Dr.-Ing., 12205 Berlin (DE)
(74) Vertreter: Serjeants LLP

(56) Entgegenhaltungen:
- EP-A1- 2 551 986
- DE-A1- 19 961 705
- US-A1- 2011 130 889

## Beschreibung

Die Erfindung betrifft ein Verfahren und eine Vorrichtung zum Einspeisen von elektrischer Leistung in ein elektrisches Energieversorgungsnetz.

Aus der DE 10 2011 053 094 A1 ist eine Solaranlage bekannt, bei der ein Photovoltaik-Generator über einen Wechselrichter mit einem Energieversorgungsnetz gekoppelt ist. Damit eine möglichst große Leistung aus der Solaranlage gewonnen werden kann, ist ein sogenannter MPP-Tracker (MPP = maximum power point) vorhanden. Dabei handelt es sich um ein Verfahren, das insbesondere zur Ansteuerung eines Wechselrichters einer Solaranlage geeignet ist.

Aufgabe der vorliegenden Erfindung ist es, die bekannte Vorrichtung und das dort angewandte Verfahren zu verbessern.

In der US 2011/0130889 ist eine Leistungsschaltung beschrieben, die eine verteilte Leistungserzeugung mit einem Leistungsverteilungsnetz verbindet, umfassend einen ersten Abschnitt, der einen Tracker für maximale Leistungspunkte enthält (MPP-Tracker), der Signale empfängt, die Strom und Spannung der verteilten Leistungserzeugung entsprechen und der ein Signal an die Leistungsschaltung übermittelt, um die Spannung der verteilten Leistungserzeugung zu steuern; einen zweiten Abschnitt, der einen Stromreferenzgenerator, einen Stromregler und einen Gleichspannungsregler enthält, der Signale empfängt, die einer Gleichspannung der Leistungsschaltung, der Spannung und dem Strom des Stromverteilungsnetzes und dem Wechselrichterstrom entsprechen, und Signale dafür ausgibt, zum Steuern der Ausgangsspannung der Leistungsschaltung. Der Stromreferenzgenerator erzeugt ein Stromreferenzsignal aus der Gleichspannung der Leistungsschaltung, der Netzspannung und dem Netzstrom so dass die in das Energieverteilungsnetz eingespeiste Energie im Wesentlichen frei von harmonischen ist.

Die Vorrichtung der DE 199 61 705 reguliert die Spannung an einem Kombinationspunkt zur kontrollierten Verbesserung der elektrischen Versorgungsqualität. Die Anordnung zur Stromversorgung und der Spannungsregler sind in einer Einheit. Der Regler hat Anordnungen zum Spezifizieren eines gewünschten Spannungsspektrums am Kombinationspunkt, zum Diagnostizieren des Zustands des Versorgungsnetzes und zum Bestimmen von Bedarfswerten von Oberwellen und / oder einer zu kompensierenden Grundfrequenz-Blindleistung. Die Anordnung führt eine Spannungsregelung an einem Kombinationspunkt aus, um die Qualität der Stromversorgung kontrolliert zu verbessern. Die Anordnung zur Stromversorgung und der Spannungsregler sind in einer Einheit enthalten. Der Regler hat Anordnungen zum Angeben eines gewünschten Spannungsspektrums an dem Kombinationspunkt, zum Diagnostizieren des Zustands des Versorgungsnetzes und zum Bestimmen von Bedarfswerten von zu kompensierenden Oberwellen und / oder einer zu kompensierenden Grundfrequenz-Blindleistung.

Die nachveröffentlichte EP2551986 offenbart ein regeneratives Einspeisesystem mit Wirkleistungsregler, Blindleistungsregler und einen Regler für den maximalen Leistungspunkt (MPP). Der MPP-Regler erhält ein Leistungssignal der regenerativen Energiequelle und erzeugt hieraus ein Sollwertsignal für den Wirkleistungsregler, der ein Phasenwinkelsignal an den Steuersatz eines Wechselrichters übergibt.

Die Erfindung löst diese Aufgabe durch ein Verfahren nach dem Anspruch 1 sowie durch eine Vorrichtung nach dem Anspruch 7.

Bei dem erfindungsgemäßen Verfahren ist eine Anordnung zur Abgabe von elektrischer Leistung in der Form einer Gleichspannung über einen Wechselrichter mit einem Energieversorgungsnetz verbunden. Es ist ein MPP-Tracker zur Beeinflussung des Wechselrichters vorhanden, von dem eine Zwischenkreis-Sollspannung ermittelt wird. Es ist ein Aussteuerungsregler vorhanden, von dem ein vorgegebener Blindleistungssollwert zu einem Blindleistungswert verändert wird. Der Wechselrichter wird von der Zwischenkreis-Sollspannung und dem Blindleistungswert beeinflusst.

Mit Hilfe des MPP-Trackers wird erreicht, dass eine möglichst große Leistung gewonnen werden kann. Dabei wird mit Hilfe des Aussteuerungsreglers erreicht, dass das gesamte Verfahren ein im Wesentlichen lineares Verhalten besitzt. Ein lineares Verhalten liegt dabei insbesondere dann vor, wenn das Verhältnis zwischen einer Netzspannung des Energieversorgungsnetzes und einer Zwischenkreisspannung des Wechselrichters in einem Bereich zwischen 0 und 1 liegt.

Das erfindungsgemäße Verfahren wird dann durchgeführt, wenn eine in das Energieversorgungsnetz eingespeiste Wirkleistung größer als ein vorgegebener Wert ist. In diesem Fall wird durch das erfindungsgemäße Verfahren immer eine möglichst große Leistung bei einer linearen Aussteuerung gewonnen.

Der vorgenannte vorgegebene Wert ist dabei eher klein, insbesondere nur geringfügig größer als Null. Vorzugsweise kann der Wert in der Größenordnung von etwa 1 % der in das Energieversorgungsnetz eingespeisten Wirkleistung liegen. Alternativ kann der Wert in Abhängigkeit von einer Verlustleistung ermittelt werden.

Bei der Erfindung wird, wenn die in das Energieversorgungsnetz eingespeiste Wirkleistung kleiner oder gleich dem vorgegebenen Wert ist, eine vorgegebene untere Spannung zu einem Zwischenkreis-Sollwert verändert und der Wechselrichter wird von dem Zwischenkreis-Sollwert und einem vorgegebenen Blindleistungssollwert beeinflusst. In diesem Fall wird also die Beeinflussung des Wechselrichters verändert und somit an die vorliegende, eher geringe Wirkleistung angepasst.

Bei einer weiteren Ausgestaltung der Erfindung wird nach einer vorgebbaren Zeitdauer die vorgebbare untere Spannung verändert, und es wird überwacht, ob die in das Energieversorgungsnetz eingespeiste Wirkleistung größer als der vorgegebene Wert wird. Ist dies der Fall, so kann das Verfahren wieder auf die anfängliche Art und Weise betrieben werden.

Weitere Merkmale, Anwendungsmöglichkeiten und Vorteile der Erfindung ergeben sich aus der nachfolgenden Beschreibung von Ausführungsbeispielen der Erfindung, die in den zugehörigen Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Figuren.

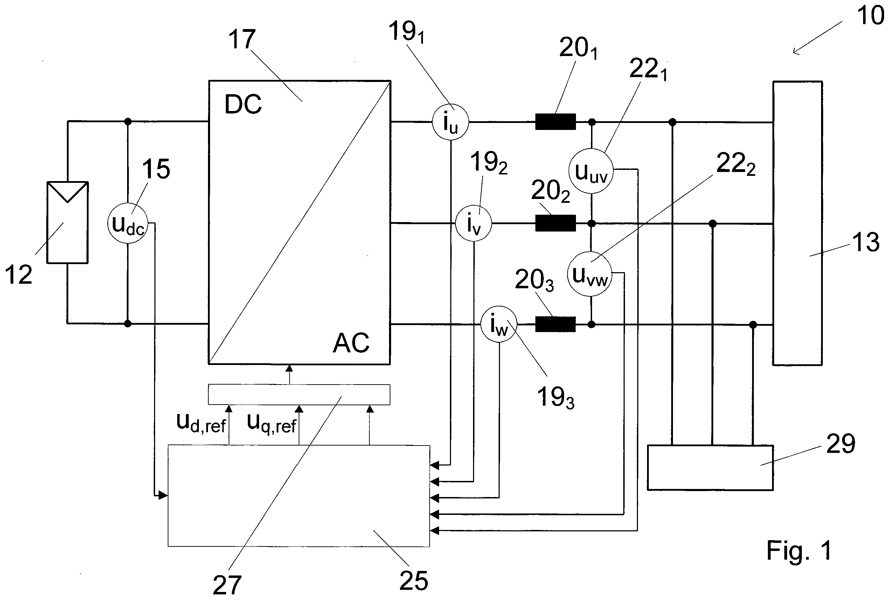

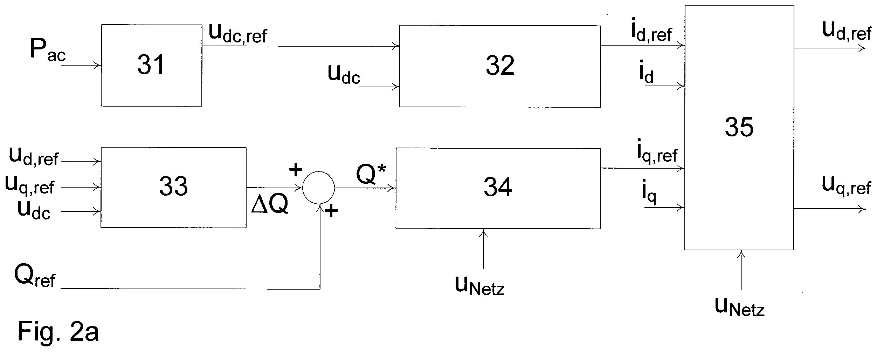

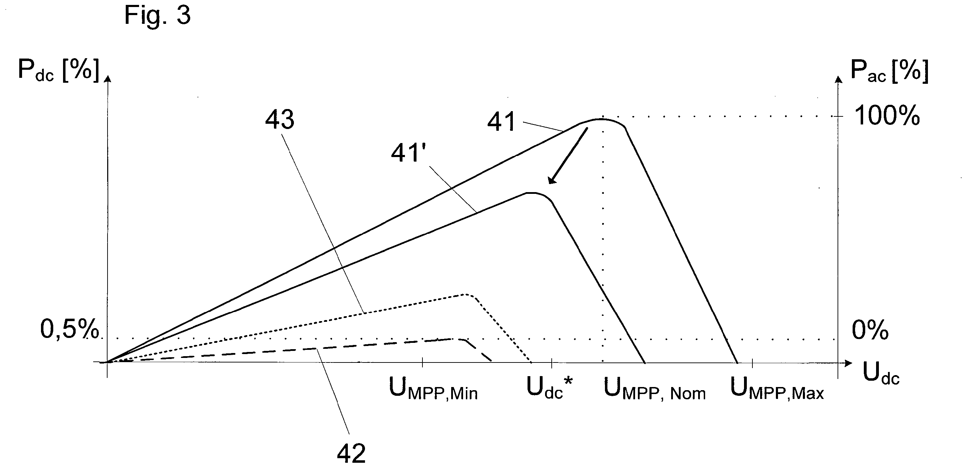

Die Figur 1 zeigt ein schematisches Blockschaltbild eines Ausführungsbeispiels einer erfindungsgemäßen Vorrichtung zum Einspeisen von elektrischer Leistung in ein elektrisches Energieversorgungsnetz, die Figuren 2a bis 2c zeigen schematische Blockschaltbilder von Verfahren zur Regelung der Vorrichtung der Figur 1, und die Figur 3 zeigt ein schematisches Diagramm zur Erläuterung der Verfahren der Figuren 2a bis 2c.

In der Figur 1 ist eine Vorrichtung 10 dargestellt, mit der elektrische Leistung in ein elektrisches Energieversorgungsnetz eingespeist werden kann. Die elektrische Leistung wird im vorliegenden Ausführungsbeispiel beispielhaft von einem Photovoltaik-Generator 12 geliefert und bei dem Energieversorgungsnetz handelt es sich beispielhaft um ein dreiphasiges Wechselstromnetz 13. Der Photovoltaik-Generator 12 kann ein Bestandteil einer Solaranlage sein, mit der Sonnenlicht in elektrische Energie umgewandelt wird.

Es wird darauf hingewiesen, dass anstelle des Photovoltaik-Generators 12 auch eine andere Anordnung vorhanden sein kann, mit der elektrische Leistung in der Form einer Gleichspannung bzw. eines Gleichstroms erzeugt und abgegeben werden kann. Ebenfalls wird darauf hingewiesen, dass anstelle des dreiphasigen Wechselstromnetzes 13 auch ein andersartig ausgebildetes Energieversorgungsnetz vorhanden sein kann.

Der Photovoltaik-Generator 12 erzeugt eine Zwischenkreis-Istspannung u_{dc}, die von einem Spannungssensor 15 gemessen und als Ausgangssignal bereitgestellt wird. Bei der Zwischenkreis-Istspannung u_{dc} handelt es sich um eine Gleichspannung. Die Zwischenkreis-Istspannung u_{dc} liegt am Eingang eines Wechselrichters 17 an, der drei Ausgangsleitungen aufweist, auf denen Wechselrichter-Istströme iᵤ, iᵥ, i_{w} vorhanden sind. Diese werden von jeweils zugehörigen, beispielsweise induktiv ausgebildeten Stromsensoren 19₁, 19₂, 19₃ gemessen, die entsprechende Ausgangssignale bereitstellen. Jede der drei Ausgangsleitungen mit den Wechselrichter-Istströmen iᵤ, iᵥ, i_{w} weist eine Induktivität 20₁, 20₂, 20₃ auf, bei denen es sich unter anderem um Netzdrosseln und/oder Leitungsinduktivitäten handeln kann. Den Induktivitäten 20₁, 20₂, 20₃ sind zwei weitere Spannungssensoren 22₁, 22₂ nachgeordnet, die zwischen die drei Ausgangsleitungen des Wechselrichters 17 geschaltet sind. Der Spannungssensor 22₁ misst eine Netz-Istspannung uᵤᵥ und der Spannungssensor 22₂ misst eine Netz-Istspannung u_{vw}. Beide Spannungssensoren 22₁, 22₂ stellen entsprechende Ausgangssignale bereit.

Bei dem Wechselrichter 17 kann es sich um jegliche elektrische Einrichtung handeln, mit der eine Gleichspannung in eine Wechselspannung bzw. ein Gleichstrom in einen Wechselstrom umgewandelt werden kann. Der Wechselrichter 17 weist elektrische Schalter auf, insbesondere elektronische Leistungshalbleiterbauelemente wie beispielsweise IGBTs (IGBT = insulated gate bipolar transistor) und/oder GTO-Transistoren (GTO = gate turn off) oder dergleichen. Gegebenenfalls weist der Wechselrichter 17 einen oder mehrere, zu dem Photovoltaik-Generator 12 parallelgeschaltete Kondensatoren auf. Beispielsweise kann es sich bei dem Wechselrichter 17 um einen zwei- oder mehrstufigen NPC-Stromrichter (NPC = neutral point clamped) handeln.

Es ist ein Steuergerät 25 vorgesehen, dem alle Ausgangssignale von den Spannungs- und Stromsensoren 15, 19₁, 19₂, 19₃, 22₁, 22₂ zugeführt sind. Bei dem Steuergerät 25 kann es sich beispielsweise um ein elektronisches Rechengerät, insbesondere um einen Personalcomputer handeln. In Abhängigkeit von den zugeführten Ausgangssignalen stellt das Steuergerät 25 zumindest eine aktive Wechselrichter-Sollspannung u_{d,ref} und eine reaktive Wechselrichter-Sollspannung u_{q,ref} zur Verfügung. Gegebenenfalls stellt das Steuergerät 25 auch noch weitere Signalgrößen ausgangsseitig zur Verfügung, die in der Figur 1 ganz allgemein als Pfeil angedeutet sind, und bei denen es sich beispielsweise um Phasenwinkel oder dergleichen handeln kann.

Die aktive Wechselrichter-Sollspannung u_{d,ref} und die reaktive Wechselrichter-Sollspannung u_{q,ref} beaufschlagen einen Pulsmustergenerator 27, der in Abhängigkeit von der aktiven Wechselrichter-Sollspannung u_{d,ref} und der reaktiven Wechselrichter-Sollspannung u_{q,ref} auf den Wechselrichter 17 einwirkt. Insbesondere beeinflusst der Pulsmustergenerator 27 die zu dem Wechselrichter 17 zugehörigen elektrischen Schalter derart, dass die eingangsseitig am Wechselrichter 17 vorhandene Gleichspannung, nämlich die Zwischenkreis-Istspannung u_{dc}, in ausgangsseitige Wechselspannungen bzw. Wechselströme umgewandelt werden, nämlich in die Wechselrichter-Istströme iᵤ, iᵥ, i_{w}.

Die drei Ausgangsleitungen des Wechselrichters 17 sind, den Induktivitäten 20₁, 20₂, 20₃ nachgeordnet, mit einem Netzfilter 29 verbunden, das der Glättung der erzeugten Wechselspannung bzw. des erzeugten Wechselstroms dient. Danach sind die drei Ausgangsleitungen des Wechselrichters 17 an das dreiphasige Wechselstromnetz 13 angeschlossen, so dass die auf den Ausgangsleitungen vorhandenen Wechselrichter-Istströme iᵤ, iᵥ, i_{w} in das Wechselstromnetz 13 eingespeist werden.

Das Steuergerät 25 ist dazu vorgesehen, den Wechselrichter 17 derart über den Pulsmustergenerator 27 zu beeinflussen, dass die Wechselrichter-Istströme iᵤ, iᵥ, i_{w} und damit die in das Wechselstromnetz 13 einzuspeisende elektrische Leistung einen erwünschten zeitlichen Verlauf besitzt. Insbesondere soll es sich dabei, wie bereits gesagt wurde, um Wechselströme handeln.

Zu diesem Zweck ist das Steuergerät 25 derart ausgebildet, dass mit ihm die nachfolgend anhand der Figuren 2a bis 2c erläuterten Verfahren ausgeführt werden können. Bei diesen Verfahren handelt es sich um Steuer- oder Regelverfahren, die beispielsweise mit Hilfe einer entsprechenden Programmierung des Steuergeräts 25 realisiert werden können. Die nachfolgend erläuterten Verfahren können also insbesondere in der Form eines auf einem Datenspeicher abgespeicherten Computerprogramms vorliegen.

In der Figur 2a ist ein Verfahren dargestellt, das nur dann ausgeführt wird, wenn die in das Wechselstromnetz 13 eingespeiste Wirkleistung P_{ac} größer ist als ein vorgegebener Wert: P_{ac}>K. Diese Bedingung wird nachfolgend noch näher erläutert werden. Zur Ausführung des Verfahrens ist in der Figur 2a ein sogenannter MPP-Tracker 31 (MPP = maximum power point), ein Zwischenkreis-Spannungsregler 32, ein Aussteuerungsregler 33, eine Blindstromvorsteuerung 34 und ein Stromregler 35 vorhanden.

Dem MPP-Tracker 31 ist die in das Wechselstromnetz 13 eingespeiste Wirkleistung P_{ac} zugeführt. Diese Wirkleistung P_{ac} kann von dem Steuergerät 25 beispielsweise aus den gemessenen Wechselrichter-Istströmen iᵤ, iᵥ, i_{w} und Netz-Istspannungen uᵤᵥ, u_{vw} ermittelt werden. Ist die ermittelte Wirkleistung P_{ac} größer als der Wert K, so wird, wie erwähnt, das Verfahren nach der Figur 2a ausgeführt.

Ausgangsseitig erzeugt der MPP-Tracker 31 eine Zwischenkreis-Sollspannung u_{dc,ref}, mit der der nachfolgende Zwischenkreis-Spannungsregler 32 beeinflusst wird. Mit dem MPP-Tracker 31 soll erreicht werden, dass die in das Wechselstromnetz 13 eingespeiste Wirkleistung P_{ac} möglichst immer ein Maximum aufweist.

Zu diesem Zweck verändert der MPP-Tracker 31 die Zwischenkreis-Sollspannung u_{dc,ref} um einen kleinen Wert, beispielsweise um 5 Volt. Insbesondere wird die Zwischenkreis-Sollspannung u_{dc,ref} um diesen kleinen Wert erhöht. Dann wird der weitere Verlauf der in das Wechselstromnetz 13 eingespeisten Wirkleistung P_{ac} beobachtet. Erhöht sich die Wirkleistung P_{ac}, so wird der veränderte Wert der Zwischenkreis-Sollspannung u_{dc,ref} beibehalten. Vermindert sich jedoch die Wirkleistung P_{ac}, so wird wieder auf den ursprünglichen Wert der Zwischenkreis-Sollspannung u_{dc,ref} zurückgegangen.

Dieses Vorgehen wird fortlaufend wiederholt. Auf diese Weise wird erreicht, dass die in das Wechselstromnetz 13 eingespeiste Wirkleistung P_{ac}, wie erwünscht, möglichst immer ein Maximum besitzt.

Wie bereits erwähnt wurde, ist der Zwischenkreis-Spannungsregler 32 dem MPP-Tracker 31 nachgeordnet. Dem Zwischenkreis-Spannungsregler 32 ist die Zwischenkreis-Sollspannung u_{dc,ref} und die Zwischenkreis-Istspannung u_{dc} zugeführt. In Abhängigkeit davon erzeugt der Zwischenkreis-Spannungsregler 32 einen aktiven Wechselrichter-Sollstrom i_{d,ref}, der dem Stromregler 35 zugeführt ist.

Insbesondere erzeugt der Zwischenkreis-Spannungsregler 32 den Wechselrichter-Sollstrom i_{d,ref} derart, dass die Zwischenkreis-Istspannung u_{dc} möglichst schnell und genau der Zwischenkreis-Sollspannung u_{dc,ref} nachfolgt. Zu diesem Zweck können in dem Zwischenkreis-Spannungsregler 32 jegliche Steuer- und/oder Regelungsverfahren zur Anwendung kommen.

Dem Aussteuerungsregler 33 sind die aktive und reaktive Wechselrichter-Sollspannung u_{d,ref}, u_{q,ref} zugeführt, die, wie noch erläutert werden wird, von dem Stromregler 35 erzeugt werden. Weiterhin liegt an dem Aussteuerungsregler 33 die Zwischenkreis-Istspannung u_{dc} an. In Abhängigkeit davon erzeugt der Aussteuerungsregler 33 einen Blindleistungs-Anpassungswert ΔQ derart, dass das Verhältnis zwischen einer nachfolgend näher erläuterten Netzspannungsamplitude U_{Netz} und der Zwischenkreis-Istspannung u_{dc} in einem Bereich zwischen "0" und "1" verbleibt, dass also die Aussteuerung der Vorrichtung 10 im Wesentlichen linear ist.

Der Blindleistungs-Anpassungswert ΔQ wird mit einem Blindleistungssollwert Q_{ref} additiv zu einem Blindleistungswert Q* verknüpft. Der Blindleistungssollwert Q_{ref} kann beispielsweise von dem Betreiber des Wechselstromnetzes 13 vorgegeben oder auf sonstige Weise ermittelt werden. Der Blindleistungssollwert Q_{ref} gibt diejenige Blindleistung vor, die, aus welchen Gründen auch immer, in das Wechselstromnetz 13 eingespeist werden soll.

Der Blindleistungswert Q* ist der Blindstromvorsteuerung 34 zugeführt. Weiterhin ist der Blindstromvorsteuerung 34 die Netzspannungsamplitude U_{Netz} zugeführt, die von dem Steuergerät 25 aus den Netz-Istspannungen uᵤᵥ, u_{vw} ermittelt wird. In Abhängigkeit davon erzeugt die Blindstromvorsteuerung 34 einen reaktiven Wechselrichter-Sollstrom i_{q,ref}, der dem Stromregler 35 zugeführt ist.

Aus den gemessenen Wechselrichter-Istströmen iᵤ, iᵥ, i_{w} ermittelt das Steuergerät 25 einen aktiven und reaktiven Wechselrichter-Iststrom i_{d}, i_{q}. Diese sind dem Stromregler 35 zugeführt. In Abhängigkeit von den zugeführten aktiven und reaktiven Wechselrichter-Sollströmen i_{d,ref}, i_{q,ref}, den zugeführten aktiven und reaktiven Wechselrichter-Istströmen i_{d}, i_{q} und der Netzspannungsamplitude U_{Netz} erzeugt der Stromregler 35 die bereits erwähnten und dem Aussteuerungsregler 33 zugeführten aktiven und reaktiven Wechselrichter-Sollspannungen u_{d,ref}, u_{q,ref}. Der Stromregler 35 erzeugt diese Wechselrichter-Sollspannungen u_{d,ref}, u_{q,ref} dabei derart, dass die Wechselrichter-Istströme i_{d}, i_{q} möglichst schnell und genau den Wechselrichter-Sollströmen i_{d,ref}, i_{q,ref} nachfolgen. Zu diesem Zweck können in dem Stromregler 35 jegliche Steuer- und/oder Regelungsverfahren zur Anwendung kommen.

Wie erläutert wurde, beaufschlagen die aktive und reaktive Wechselrichter-Sollspannung u_{d,ref}, u_{q,ref} den Pulsmustergenerator 27. Die beiden Wechselrichter-Sollspannungen u_{d,ref}, u_{q,ref} geben die Beeinflussung der elektronischen Schalter des Wechselrichters 17 durch den Pulsmustergenerator 27 vor und beeinflussen damit die von dem Wechselrichter 17 erzeugten Wechselrichter-Istströme iᵤ, iᵥ, i_{w} und letztlich auch die beiden Netz-Istspannungen uᵤᵥ, u_{vw}.

In dem Diagramm der Figur 3 sind beispielhafte Kennlinien des Photovoltaik-Generators 12 dargestellt. Im vorliegenden Ausführungsbeispiel wird davon ausgegangen, dass der Photovoltaik-Generator 12 mehrere Photovoltaik-Module aufweist, die zur Umwandlung von eingestrahltem Sonnenlicht in elektrische Energie geeignet sind. Weiterhin wird davon ausgegangen, dass sich die Photovoltaik-Module im Freien befinden und eine Außentemperatur von etwa 25 Grad vorhanden ist. Es wird darauf hingewiesen, dass die nachfolgend erläuterten Kennlinien nicht nur von der Lichteinstrahlung abhängig sind, sondern auch von der vorgenannten Außentemperatur. Insbesondere kann die nachfolgend erläuterte Wirkleistung bei höheren Außentemperaturen geringer werden. Diese Temperaturabhängigkeit wird nachfolgend jedoch nicht näher berücksichtigt.

Auf der Abszisse der Figur 3 ist die Zwischenkreis-Istspannung u_{dc} und auf der Ordinate ist die in das Wechselstromnetz 13 eingespeiste Wirkleistung P_{ac} einerseits und eine von dem Photovoltaik-Generator 12 abgegebenen Leistung P_{dc} andererseits aufgetragen. Die beiden Leistungen sind dabei jeweils als prozentuale Werte angegeben. Zwischen den beiden Leistungen besteht dabei im Wesentlichen folgender Zusammenhang: P_{ac} = P_{dc} - V, wobei es sich bei der Größe V um eine Verlustleistung des Photovoltaik-Generators 12 und/oder des Wechselrichters 17 handelt.

Bei hoher Lichteinstrahlung ist die Kennlinie 41 der Figur 3 relevant. In diesem Fall ist die in das Wechselstromnetz 13 eingespeiste Wirkleistung P_{ac} größer als der Wert K. Somit kommt das Verfahren nach der Figur 2a zur Anwendung. Im vorliegenden Ausführungsbeispiel wird dabei davon ausgegangen, dass bei dem Verfahren nach der Figur 2a die von dem MPP-Tracker 31 gelieferte Zwischenkreis-Sollspannung u_{dc,ref} im Wesentlichen Werte zwischen einer unteren Spannung U_{MPP,Min} und einer oberen Spannung U_{MPP,Max} einnehmen kann.

Werden nunmehr bei hoher Lichteinstrahlung (und bei einer Außentemperatur von 25 Grad) etwa 100 % der Wirkleistung P_{ac}, also letztlich die Nennleistung des Photovoltaik-Generators 12, in das Wechselstromnetz 13 eingespeist, so weist die Zwischenkreis-Sollspannung u_{dc,ref} einen Wert U_{MPP,Nom} auf. Dieser Wert U_{MPP,Nom} stellt den Arbeitspunkt dar, mit dem der Wechselrichter 17 somit bei der Einspeisung der Nennleistung des Photovoltaik-Generators 12 in das Wechselstromnetz 13 betrieben wird.

Wenn die in das Wechselstromnetz 13 eingespeiste Wirkleistung P_{ac} geringer wird, weil beispielsweise die Lichteinstrahlung geringer wird, so verschiebt sich die Kennlinie 41 in Richtung zu einer Kennlinie 41. Solange die Wirkleistung P_{ac} dabei größer als der vorgegebene Wert K ist, wird weiterhin das anhand der Figur 2a erläuterte Verfahren durchgeführt. In diesem Fall verschiebt sich auch der Arbeitspunkt des Wechselrichters 17 entsprechend dem dargestellten Pfeil in Richtung zu der unteren Spannung U_{MPP,Min}.

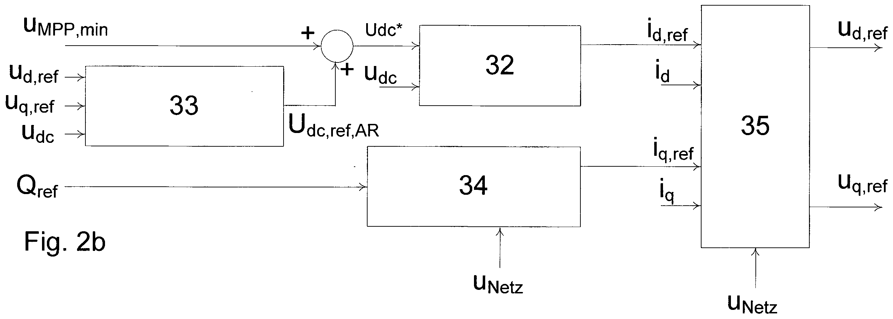

Wenn aber die in das Wechselstromnetz 13 eingespeiste Wirkleistung P_{ac} beispielsweise aufgrund einer noch geringeren Lichteinstrahlung gleich oder kleiner als der Wert K wird, so wird das Verfahren nach der Figur 2a deaktiviert und es wird stattdessen ein Verfahren gemäß der Figur 2b ausgeführt.

Bei dem Wert K kann es sich dabei um einen Wert handeln, der nur geringfügig größer ist als Null. Beispielsweise kann der Wert K in der Größenordnung von etwa 1 % der Wirkleistung P_{ac} liegen.

Ebenfalls ist es möglich, den Wert K mit Hilfe der von dem Photovoltaik-Generator 12 abgegebenen Leistung P_{dc} vorzugeben. Zwischen der Wirkleistung P_{ac}, der Leistung P_{dc} und der Verlustleistung V besteht im Wesentlichen der bereits erwähnte Zusammenhang: P_{ac} = P_{dc} - V. Der Wert K kann nunmehr gleich der Verlustleistung V vorgegeben werden. Im Ausführungsbeispiel gemäß der Figur 3 liegt die Verlustleistung V beispielhaft bei 0,5%.

Wenn die in das Wechselstromnetz 13 eingespeiste Wirkleistung P_{ac} kleiner oder gleich dem Wert K ist, dann entspricht dies der Kennlinie 42 der Figur 3. Die Wirkleistung P_{ac} ist dann nahezu Null oder gleich Null, und die von dem Photovoltaik-Generator 12 abgegebene Leistung P_{dc} ist im vorliegenden Ausführungsbeispiel etwa 0,5 %. Der resultierende Unterschied entspricht, wie bereits erläutert wurde, im Wesentlichen der erwähnten Verlustleistung V.

Wie ebenfalls bereits erläutert wurde, kann das Steuergerät 25 die in das Wechselstromnetz 13 eingespeiste Wirkleistung P_{ac} ermitteln. Wenn das Steuergerät 25 nunmehr feststellt, dass die in das Wechselstromnetz 13 eingespeiste Wirkleistung P_{ac} kleiner oder gleich dem Wert K ist, dann schaltet das Steuergerät 25 von dem Verfahren nach der Figur 2a auf das Verfahren nach der Figur 2b um.

Im Unterschied zur Figur 2a ist bei dem Verfahren nach der Figur 2b kein MPP-Tracker 31 vorhanden bzw. der MPP-Tracker 31 ist deaktiviert. Statt dessen wird bei der Figur 2b von dem Aussteuerungsregler 33 ein AR-Zwischenkreis-Sollwert U_{dc,ref,AR} erzeugt, der mit dem Wert U_{MPP,Min} additiv zu einem Zwischenkreis-Sollwert U_{dc}* verknüpft wird. Der AR-Zwischenkreis-Sollwert U_{dc,ref,AR} wird dabei von dem Aussteuerungsregler 33 in Abhängigkeit von der aktiven und reaktiven Wechselrichter-Sollspannung u_{d,ref}, u_{q,ref} sowie der Zwischenkreis-Istspannung u_{dc} ermittelt.

Der Wert U_{dc}* ist dem Zwischenkreisspannungsregler 32 zugeführt. Weiterhin wird bei der Figur 2b der vorgegebene Blindleistungssollwert Q_{ref} direkt der Blindstromvorsteuerung 34 zugeführt. Der dem Zwischenkreisspannungsregler 32 zugeführte Wert U_{dc}* stellt dabei gemäß der Kennlinie 42 den Arbeitspunkt für den Wechselrichter 17 dar.

Die Funktionsweise des Zwischenkreisspannungsreglers 32, der Blindstromvorsteuerung 34 und des Stromreglers 35 entspricht dann dem bereits erläuterten Verfahren nach der Figur 2a.

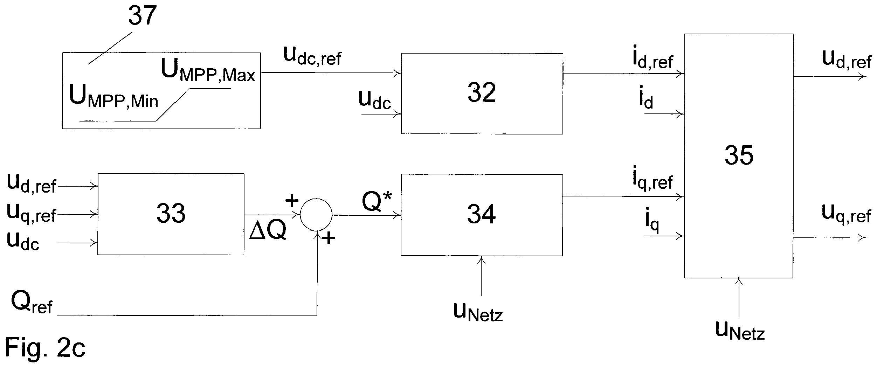

Wenn, wie erläutert wurde, das Verfahren der Figur 2a deaktiviert und statt dessen das Verfahren nach der Figur 2b durchgeführt wird, dann wird im Wesentlichen gleichzeitig mit dem Übergang zu dem Verfahren nach der Figur 2b eine vorgebbare Zeitdauer gestartet. Nach Ablauf dieser Zeitdauer wird das Verfahren nach der Figur 2b deaktiviert und es wird stattdessen ein Verfahren gemäß der Figur 2c ausgeführt.

Das Verfahren nach der Figur 2c stimmt weitgehend mit dem Verfahren nach der Figur 2a überein. Insoweit sind in der Figur 2c gleichlautende Bezugszeichen verwendet, in deren Zusammenhang auf die vorstehenden Erläuterungen zu der Figur 2a verwiesen wird.

Im Unterschied zur Figur 2a ist bei dem Verfahren nach der Figur 2c kein MPP-Tracker 31 vorhanden bzw. der MPP-Tracker 31 ist weiterhin deaktiviert. Statt dessen wird bei dem Verfahren der Figur 2c die Zwischenkreis-Sollspannung u_{dc,ref} fortlaufend zwischen der unteren Spannung U_{MPP,Min} und der oberen Sapnnung U_{MPP,MAX} verändert. Hierzu ist in der Figur 2c ein Block 37 vorhanden. Gemäß diesem Block 37 wird die vorgenannte Veränderung der Zwischenkreis-Sollspannung u_{dc,ref} im vorliegenden Ausführungsbeispiel linear bzw. rampenförmig durchgeführt.

Im Übrigen stimmt der Aufbau und die Funktionsweise des Verfahrens der Figur 2c mit demjenigen der Figur 2a überein.

Bei dem Verfahren nach der Figur 2c wird von dem Steuergerät 25 überwacht, ob die in das Wechselstromnetz 13 eingespeiste Wirkleistung P_{ac} während der Veränderung der Zwischenkreis-Sollspannung u_{dc,ref} wieder größer als der Wert K wird. Ist dies nicht der Fall, so wird nach Ablauf einer weiteren vorgebbaren Zeitdauer die erläuterte Veränderung der Zwischenkreis-Sollspannung u_{dc,ref} mit Hilfe des Blocks 37 erneut durchgeführt. Es wird also die Zwischenkreis-Sollspannung u_{dc,ref} erneut beispielsweise rampenförmig durchlaufen. Dabei wird von dem Steuergerät wiederum überwacht, ob die in das Wechselstromnetz 13 eingespeiste Wirkleistung P_{ac} während der Veränderung der Zwischenkreis-Sollspannung u_{dc,ref} wieder größer als der Wert K wird. In Abhängigkeit von dem Ergebnis dieser Überwachung kann das vorstehende Vorgehen erneut und gegebenenfalls fortlaufend wiederholt.

Die vorgenannten vorgebbaren Zeitdauern können beliebige Werte einnehmen, beispielsweise 30 Minuten oder dergleichen. Die Zeitdauern können gegebenenfalls aber auch Null sein.

Wird von dem Steuergerät 25 nunmehr irgendwann festgestellt, dass die in das Wechselstromnetz 13 eingespeiste Wirkleistung P_{ac} während der Veränderung der Zwischenkreis-Sollspannung u_{dc,ref} wieder größer als der Wert K geworden ist, so bedeutet dies, dass nicht mehr die Kennlinie 42, sondern nunmehr beispielsweise die Kennlinie 43 relevant ist. In diesem Fall wird von dem Steuergerät 25 von dem Verfahren der Figur 2c wieder auf das bereits erläuterte Verfahren nach der Figur 2a übergegangen.

Der Wechselrichter 17 wird danach wieder anhand des Verfahrens der Figur 2a beeinflusst. In Abhängigkeit von der beobachteten, in das Wechselstromnetz 13 eingespeisten Wirkleistung P_{ac} können dann auch wieder, wie erläutert wurde, die Verfahren nach den Figuren 2b und 2c zum Einsatz kommen.

## Patentansprüche

1. Verfahren zum Einspeisen von elektrischer Leistung, die von einem Photovoltaik-Generator geliefert wird, in ein elektrisches Energieversorgungsnetz, wobei eine Anordnung zur Abgabe von elektrischer Leistung in der Form einer Gleichspannung über einen Wechselrichter (17) mit einem Energieversorgungsnetz (13) verbunden ist, und wobei ein MPP-Tracker (31), ein Zwischenkreis-Spannungsregler (32), ein Aussteuerungsregler (33), eine Blindstrom-Vorsteuerung (34) und ein Stromregler (35) zur Beeinflussung des Wechselrichters (17) vorhanden sind, wobei das Verfahren mit den folgenden Schritten durchgeführt wird, wenn eine in das Energieversorgungsnetz (13) eingespeiste Wirkleistung (P_{ac}) größer als ein vorgegebener Wert (K) ist:
dem MPP-Tracker (31) wird die in das Wechselstromnetz (13) eingespeiste Wirkleistung (P_{ac}) zugefuhrt, und von dem MPP-Tracker (31) wird eine Zwischenkreis-Sollspannung (Udc,ref) ermittelt,
wobei ein Blindleistungs-Anpassungswert (ΔQ) von dem Aussteuerungsregler (33) bestimmt wird, welcher mit einem vorgegebenen Blindleistungssollwert (Q_{ref}) additiv zu einem Blindleistungswert (Q*) verändert wird,
wobei von dem Aussteuerungsregler (33) in Abhängigkeit von einer aktiven und reaktiven Wechselrichter-Sollspannung (U_{d,ref}, U_{q,ref}) und von einer gemessenen Zwischenkreis-Istspannung (U_{dc}) der Blindleistungs-Anpassungswert (ΔQ) bestimmt wird;
wobei aus der Zwischenkreis-Sollspannung (U_{dc,ref} ) die aktive Wechselrichter-Sollspannung (U_{d,ref}) und aus dem Blindleistungswert (Q*) die reaktive Wechselrichter-Sollspannung (U_{q,ref}) ermittelt wird, und der Wechselrichter (17) von den aktiven und reaktiven Wechselrichter-Sollspannungen (U_{d,ref}, U_{q,ref}) beeinflusst wird,
wobei ein aktiver Wechselrichter-Sollstrom (i_{d,ref}) abhängig von der gemessenen Zwischenkreis-Istspannung (U_{dc}) und der von dem MPP-Tracker (31) ermittelten Zwischenkreis-Sollspannung (U_{dc,ref}) von dem Zwischenkreis-Spannungsregler (32) bestimmt wird;
wobei ein reaktiver Wechselrichter-Sollstrom (i_{q,ref}) abhängig von dem Blindleistungswert (Q*) und einer Netzspannungsamplitude (U_{netz}) von der Blindstrom-Vorsteuerung (34) bestimmt wird; und
wobei die aktive und reaktive Wechselrichter-Sollspannung (U_{d,ref}, U_{q,ref}) abhängig von dem aktiven Wechselrichter-Sollstrom (i_{d,ref}), dem reaktiven Wechselrichter-Sollstrom (i_{q,ref}), einem aktiven Wechselrichter-Iststrom (I_{d}), einem reaktiven Wechselrichter-Iststrom (i_{q}) und der Netzspannungsamplitude (U_{netz}) von dem Stromregler (35) bestimmt wird.

2. Verfahren nach Anspruch 1, wobei der aktive oder reaktive Wechselrichter-Iststrom (i_{d}, i_{q}) aus gemessenen Wechselrichter-Istströmen (iᵤ, iᵥ, i_{w}) ermittelt wird.

3. Verfahren nach einem der vorstehenden Ansprüche, wobei das Verfahren mit folgenden Schritten durchgeführt wird wenn die in das Energieversorgungsnetz (13) eingespeiste Wirkleistung (P_{ac}) kleiner oder gleich einem/dem vorgegebenen Wert (K) ist:
eine vorgegebene untere Spannung (U_{MPP,Min}) wird zu einem Zwischenkreis-Sollwert (U_{dc}*) verändert und der Wechselrichter (17) wird von dem Zwischenkreis-Sollwert (U_{dc}*) und einem vorgegebenen Blindleistungssollwert (Q_{ref}) beeinflusst.

4. Verfahren nach Anspruch 3, wobei von dem Aussteuerungsregler (33) in Abhängigkeit von einem Wechselrichter-Sollstrom (i_{d,ref}, i_{q,ref}) und/oder einer Wechselrichter-Sollspannung (U_{d,ref}, U_{q,ref}) eine Zwischenkreis-Sollspannung (U_{dc,ref,AR}) ermittelt wird, und wobei die Zwischenkreis-Sollspannung (U_{dc,ref,AR}) mit der unteren Spannung (U_{MPP,Min}) zu dem Zwischenkreis-Sollwert (U_{dc}*) verknüpft wird.

5. Verfahren nach einem der Ansprüche 3 oder 4, wobei nach einer vorgebbaren Zeitdauer die vorgebbare untere Spannung (U_{MPP,Min}) verändert wird, und wobei überwacht wird, ob die in das Energieversorgungsnetz (13) eingespeiste Wirkleistung (P_{ac}) größer als der vorgegebene Wert (K) wird.

6. Verfahren nach Anspruch 5, wobei, wenn die in das Energieversorgungsnetz (13) eingespeiste Wirkleistung (P_{ac}) größer als der vorgegebene Wert (K) wird, von dem MPP-Tracker (31) wieder die Zwischenkreis-Sollspannung (U_{dc,ref}) ermittelt und von dem Aussteuerungsregler (33) wieder der vorgegebene Blindleistungssollwert (Q_{ref}) zu dem Blindleistungswert (Q*) verändert und der Wechselrichter (17) wieder von der Zwischenkreis-Sollspannung (U_{dc,ref}) und dem Blindleistungswert (Q*) beeinflusst wird.

7. Vorrichtung zum Einspeisen von elektrischer Leistung in ein elektrisches Energieversorgungsnetz, mit
einer Anordnung zur Abgabe von elektrischer Leistung in der Form einer Gleichspannung,
einem Wechselrichter (17), und
einem Steuergerät (25) aufweisend einen MPP-Tracker (31), einen Zwischenkreis-Spannungsregler (32), einen Aussteuerungsregler (33), eine Blindstrom-Vorsteuerung (34) und einen Stromregler (35) zur Beeninflussung des Wechelrichters (17),
wobei die Anordnung zur Abgabe von elektrischer Leistung in der Form einer Gleichspanung über den Wechselrichter (17) mit einem Energieversorgungsnetz (13) verbunden ist, und
wobei das Steuergerät (25), mit dem Wechselrichter (17) gekoppelt, und zur Ausführung des Verfahrens nach einem der vorstehenden Ansprüche eingerichtet ist.

8. Vorrichtung nach Anspruch 7, wobei es sich bei der Anordnung zur Abgabe von elektrischer Leistung in der Form einer Gleichspannung um einen Photovoltaik-Generator (12) handelt.

9. Vorrichtung nach einem der Ansprüche 7 oder 8, wobei der Wechselrichter (17) elektrische Schalter aufweist, und wobei das Steuergerät (25) über einen Pulsmustergenerator (27) auf die Schalter des Wechselrichters (17) einwirkt.

## Claims

1. Method for feeding electrical power, which is supplied by a photovoltaic generator, into an electrical power supply network, wherein an arrangement for supplying electrical power in the form of DC voltage is connected to an electrical supply network (13) through an inverter (17), and wherein an MPP tracker (31), an intermediate circuit voltage regulator (32), a modulation regulator (33), an idle current pre-control device (34) and a current regulator (35) for influencing the inverter (17) are provided, wherein the method is implemented using the following steps when an active power (P_{ac}) fed into the power supply network (13) is larger than a given value (K):
the active power (P_{ac}) fed into the alternating current network (13) is delivered to the MPP tracker (31), and an intermediate circuit desired voltage (U_{dc,ref}) is determined from the MPP tracker (31),
wherein an idle power adjustment value (ΔQ) is determined from the modulation regulator (33) and is changed additively, with a given idle power desired value (Q_{ref}), to an idle power value (Q*),
wherein the idle power adjustment value (ΔQ) is determined from the modulation regulator (33) depending on an active and reactive inverter desired voltage (U_{d,ref}, U_{q,ref}) and from a measured intermediate circuit actual voltage (U_{dc});
wherein the active inverter desired voltage (U_{d}, _{ref}) is determined from the intermediate circuit desired voltage (U_{dc, ref}) and the reactive inverter desired voltage (U_{q}, _{ref}) is determined from the idle power value (Q*), and the inverter (17) is influenced by the active and reactive inverter desired voltages (U_{d,ref}, U_{q,ref});
wherein an active inverter desired current (i_{d}, _{ref}) is determined from the intermediate circuit voltage regulator (32) depending on the measured intermediate circuit actual voltage (u_{dc}) and the intermediate circuit desired voltage (U_{dc, ref}) determined from the MPP tracker (31),
wherein a reactive inverter desired current (i_{q}, _{ref}) is determined from the idle current pre-control device (34) depending on the idle power value (Q*) and a mains voltage amplitude (U_{netz}); and
wherein the active and reactive inverter desired voltage (U_{d,ref}, U_{q,ref}) is determined from the current regulator (35) depending on the active inverter desired current (i_{d}, _{ref}), the reactive inverter desired current (i_{q,ref}), an active inverter actual current (I_{d}), a reactive inverter actual current (i_{q}) and the mains voltage amplitude (U_{netz}).

2. Method according to claim 1, wherein the active or reactive inverter actual current (i_{d}, i_{q}) is determined from measured inverter actual currents (iᵤ, iᵥ, i_{w}).

3. Method according to any of the preceding claims, wherein the method is implemented using the following steps when the active power (P_{ac}) fed into the power supply network (13) is smaller than or equal to a/the given value (K):
a given lower voltage (U_{MPP,min}) is changed to an intermediate circuit desired value (U_{dc}*) and the inverter (17) is influenced by the intermediate circuit desired value (U_{dc}*) and a given idle power desired value (Q_{ref}).

4. Method according to claim 3, wherein an intermediate circuit desired voltage (U_{dc, ref,AR}) is determined from the modulation regulator (33) depending on an inverter desired current (i_{d}, _{ref}, i_{q,ref}) and/or an inverter desired voltage (U_{d}, _{ref}, U_{q,ref}), and wherein the intermediate circuit desired voltage (U_{dc, ref,AR}) is linked to the intermediate circuit desired value (U_{dc}*) with the lower voltage (U_{MPP,min}).

5. Method according to any of claims 3 or 4, wherein after a time period that can be set, the lower voltage (U_{MPP,min}) that can be set is changed, and wherein it is monitored whether the active power (P_{ac}) fed into the power supply network (13) becomes larger than the given value (K).

6. Method according to claim 5, wherein, when the active power (P_{ac}) fed into the power supply network (13) becomes larger than the given value (K), the intermediate circuit desired voltage (U_{dc, ref}) is determined once again by the MPP tracker (31) and the given idle power desired value (Q_{ref}) is changed once again to the idle power value (Q*) by the modulation regulator (33) and the inverter (17) is once again influenced by the intermediate circuit desired voltage (U_{dc, ref}) and the idle power value (Q*).

7. Device for feeding electrical power into an electrical power supply network, with an arrangement for supplying electrical power in the form of DC voltage,
an inverter (17), and
a control device (25) having an MPP tracker (31), an intermediate circuit voltage regulator (32), a modulation regulator (33), an idle current pre-control device (34) and a current regulator (35) for influencing the inverter (17),
wherein the arrangement for supplying electrical power in the form of DC voltage is connected to a power supply network (13) through the inverter (17), and
wherein the control device (25) is coupled to the inverter (17) and configured to carry out the method according to any of the preceding claims.

8. Device according to claim 7, wherein the arrangement for supplying electrical power in the form of DC voltage is a photovoltaic generator (12).

9. Device according to any of claims 7 or 8, wherein the inverter (17) has electrical switches, and wherein the control device (25) acts on the switches of the inverter (17) through a pulse pattern generator (27).

## Revendications

1. Procédé destiné à l'injection d'une puissance électrique qui est fournie par un générateur photovoltaïque, dans un réseau d'approvisionnement en énergie électrique, dans lequel un agencement destiné à l'émission de puissance électrique sous la forme d'une tension continue via un convertisseur continu-alternatif (17) est relié à un réseau d'approvisionnement en énergie (13), et dans lequel un régulateur MPP (31), un régulateur de tension de circuit intermédiaire (32), un régulateur de niveau (33), une précommande de courant réactif (34) et un régulateur de courant (35) destinés à influencer le convertisseur continu-alternatif (17) sont présents, dans lequel le procédé est exécuté avec les étapes suivantes lorsqu'une puissance active (P_{ac}) injectée dans le réseau d'approvisionnement en énergie (13) est supérieure à une valeur prédéfinie (K) :
la puissance réactive (P_{ac}) injectée dans le réseau à courant alternatif (13) est amenée au régulateur MPP (31) et une tension de consigne de circuit intermédiaire (U_{dc,ref}) est établie par le régulateur MPP (31),
dans lequel une tension d'adaptation à une puissance réactive (ΔQ) est déterminée par le régulateur de niveau (33) qui est modifiée avec une valeur de consigne de puissance réactive (Q_{ref}) prédéfinie en plus d'une valeur de puissance réactive (Q*),
dans lequel la valeur d'adaptation à une puissance réactive (ΔQ) est déterminée par le régulateur de niveau (33) en fonction d'une tension de consigne de convertisseur continu-alternatif active et réactive (U_{d,ref}, U_{q,ref}) et par une tension réelle de circuit intermédiaire mesurée (U_{dc}) ;
dans lequel la tension de consigne de convertisseur continu-alternatif active (U_{d,ref}) est établie à partir de la tension de consigne de circuit intermédiaire (U_{dc,ref}) et la tension de consigne de convertisseur continu-alternatif réactive (U_{q,ref}) est déterminée à partir de la valeur de puissance réactive (Q*), et le convertisseur continu-alternatif (17) est influencé par les tensions de consigne de convertisseur continu-alternatif active et réactive (U_{d,ref}, U_{q,ref}),
dans lequel un courant de consigne de convertisseur continu-alternatif (i_{d,ref}) est déterminé en fonction de la tension réelle de circuit intermédiaire (U_{dc}) mesurée et la tension de consigne de circuit intermédiaire (U_{dc,ref}) établie par le régulateur MPP (31) est déterminée par le régulateur de tension de circuit intermédiaire (32) ;
dans lequel un courant de convertisseur continu-alternatif (i_{q,ref}) est déterminé en fonction de la valeur de puissance réactive (Q*) et d'une amplitude de tension de réseau (U_{netz}) par la précommande de courant réactif (34) ; et
dans lequel la tension de consigne de convertisseur continu-alternatif active et réactive (U_{d,ref}, U_{q,ref}) est déterminée en fonction du courant de consigne de convertisseur continu-alternatif actif (i_{d,ref}), du courant de consigne de convertisseur continu-alternatif réactif (i_{q,ref}), d'un courant réel de convertisseur continu-alternatif (I_{d}), d'un courant réel de convertisseur continu-alternatif réactif (i_{q}) et de l'amplitude de tension de réseau (U_{netz}) par le régulateur de courant (35).

2. Procédé selon la revendication 1, dans lequel le courant réel de convertisseur continu-alternatif actif ou réactif (i_{d}, i_{q}) est déterminé à partir de courants réels de convertisseur continu-alternatif mesurés (iᵤ, iᵥ, i_{w}).

3. Procédé selon l'une des revendications précédentes, dans lequel le procédé avec les étapes suivantes est exécuté lorsque la puissance réactive (P_{ac}) injectée dans le réseau d'approvisionnement en énergie (13) est inférieure ou égale à une/la valeur prédéfinie (K) :
une tension plus basse prédéfinie (U_{MPP,Min}) est modifiée pour atteindre une valeur de consigne de circuit intermédiaire (U_{dc}*) et le convertisseur continu-alternatif (17) est influencé par la valeur de consigne de circuit intermédiaire (U_{dc}*) et une valeur de consigne de puissance réactive prédéfinie (Q_{ref}).

4. Procédé selon la revendication 3, dans lequel une tension de consigne de circuit intermédiaire (U_{dc,ref,AR}) est établie par le régulateur de niveau (33) en fonction d'un courant de convertisseur continu-alternatif (i_{d,ref}, i_{q,ref}) et/ou d'une tension de consigne de convertisseur continu-alternatif (U_{d,ref}, U_{q,ref}), et dans lequel la tension de consigne de circuit intermédiaire (U_{dc,ref,AR}) est associée à la tension plus basse (U_{MPP,Min}) pour atteindre la valeur de consigne de circuit intermédiaire (U_{dc}*).

5. Procédé selon l'une des revendications 3 ou 4, dans lequel à l'issue d'une période qui peut être prédéfinie la tension plus basse qui peut être prédéfinie (U_{MPP,Min}) est modifiée, et dans lequel on surveille si la puissance active (P_{ac}) injectée dans le réseau d'approvisionnement en énergie (13) est supérieure à la valeur prédéfinie (K).

6. Procédé selon la revendication 5, dans lequel, lorsque la puissance active (P_{ac}) injectée dans le réseau d'approvisionnement en énergie (13) est supérieure à la valeur prédéfinie (K), la tension de consigne de circuit intermédiaire (U_{dc,ref}) est à nouveau établie par le régulateur MPP (31) et la valeur de puissance réactive prédéfinie (Q_{ref}) est de nouveau modifiée par le régulateur de niveau (33) pour atteindre la valeur de puissance réactive (Q*) et le convertisseur continu-alternatif (17) est de nouveau influencé par la tension de consigne de circuit intermédiaire (U_{dc,ref}) et la valeur de puissance réactive (Q*).

7. Dispositif destiné à l'injection de puissance électrique dans un réseau d'approvisionnement en énergie électrique, avec
un agencement destiné à l'émission de puissance électrique sous la forme d'une tension continue,
un convertisseur continu-alternatif (17), et
un appareil de commande (25) présentant un régulateur MPP (31), un régulateur de tension de circuit intermédiaire (32), un régulateur de niveau (33), une précommande de courant réactif (34) et un régulateur de courant (35) destinés à influencer le convertisseur continu-alternatif (17),
dans lequel l'agencement destiné à l'émission d'une puissance électrique sous la forme d'une tension continue via le convertisseur continu-alternatif (17) est relié à un réseau d'approvisionnement en énergie (13), et
dans lequel l'appareil de commande (25) est couplé avec le convertisseur continu-alternatif (17) et conçu pour la réalisation du procédé selon l'une des revendications précédentes.

8. Dispositif selon la revendication 7, dans lequel l'agencement destiné à l'émission de puissance électrique sous la forme d'une tension continue est un générateur photovoltaïque (12).

9. Dispositif selon l'une des revendications 7 ou 8, dans lequel le convertisseur continu-alternatif (17) présente des commutateurs électriques, et dans lequel l'appareil de commande (25) agit sur les commutateurs du convertisseur continu-alternatif (17) via un générateur de modèle d'impulsions (27).
